Europäisches Patentamt

European Patent Office

Office européen des brevets

(19)

(11) Numéro de publication : **0 399 891 B1**

(12) **FASCICULE DE BREVET EUROPEEN**

(45) Date de publication du fascicule du brevet :
**05.01.94 Bulletin 94/01**

(51) Int. Cl.⁵ : **B01J 23/56,** B01D 53/36

(21) Numéro de dépôt : **90401350.5**

(22) Date de dépôt : **21.05.90**

(54) **Catalyseurs multifonctionnels, renfermant du cerium et de l'uranium et au moins un métal pour la conversion des polluants émis par les moteurs à combustion interne et leurs préparations.**

(30) Priorité : **24.05.89 FR 8906897**

(43) Date de publication de la demande :
**28.11.90 Bulletin 90/48**

(45) Mention de la délivrance du brevet :
**05.01.94 Bulletin 94/01**

(84) Etats contractants désignés :
**BE DE ES GB IT**

(56) Documents cités :
**FR-A- 2 269 374**
**FR-A- 2 466 278**
**US-A- 4 221 768**
**US-A- 4 323 542**
**US-A- 4 675 308**

(73) Titulaire : **INSTITUT FRANCAIS DU PETROLE**
**4, Avenue de Bois Préau**
**F-92506 Rueil-Malmaison Cédex (FR)**

(72) Inventeur : **Durand, Daniel**
**18, rue Michelet**
**F-92500 Rueil Malmaison (FR)**
Inventeur : **Courty, Philippe**
**91, rue Condorcet**
**F-78800 Houilles (FR)**
Inventeur : **Mabilon, Gil**
**36, rue de Tourville**
**F-78100 Saint Germain en laye (FR)**
Inventeur : **Doziere, Richard**
**Val des 4 Pignons, 4, av. Charles de Gaulle**
**F-78650 Beynes (FR)**

EP 0 399 891 B1

## Description

La présente invention concerne un catalyseur multifonctionnel et son procédé de fabrication, pour la conversion du monoxyde de carbone, des hydrocarbures et des oxydes d'azote. Elle concerne aussi son utilisation dans le traitement des gaz d'échappement de véhicules automobiles en particulier, les émissions de polluants émis par les moteurs à combustion interne (essence ou diesel), qui contribuent à contaminer l'atmosphère, principalement par des rejets en oxyde de carbone et oxydes d'azote ainsi que par les importantes quantités d'hydrocarbures imbrulés.

Pour limiter les teneurs en ces différents polluants, des catalyseurs, installés sur les lignes d'échappement, permettent d'améliorer à des degrés divers, la combustion en $CO_2$ et $H_2O$ de l'oxyde de carbone et des hydrocarbures et la réduction des oxydes d'azote en azote moléculaire.

Ces catalyseurs sont génèralement prépares à partir d'un support de type monolithique, en céramique ou en métal, sur lequel on dépose une fine couche d'un ou de plusieurs oxydes réfractaires, généralement de l'alumine, de surface et de porosité nettement supérieures à celles du support monolithique. Sur cet oxyde , est dispersée la phase métallique active composée essentiellement des métaux du groupe du platine (Pt, Rh, Pd, Re, Ru, Ir)

Il est bien connu de l'homme de l'art que ces catalyseurs, qui ne travaillent jamais en conditions opératoires stabilisées, sont soumis à des variations de températures très importantes (de l'ambiante à plus de 1000 °C), sous conditions hydrothermiques sévères, et à de fréquents changements de composition du milieu réactionnel (atmosphère oxydante ou réductrice). Ceci conduit à une rapide désactivation du catalyseur, occasionnée principalement par le frittage simultané du support et des métaux. Nombre de brevets revendiquent une limitation de ce frittage par ajout, par exemple, d'autres oxydes tels que des oxydes de terres rares, de métaux alcalins ou alcalino-terreux, d'autres oxydes réfractaires (zircone, silice...) et même de métaux de transition (brevets FR 2466278 : FR 2568143 ; US 4,678,770 ..) ; certains de ces oxydes peuvent présenter en plus de leur propriétés stabilisantes, une certaine activité catalytique (CeO2, par exemple, est actif dans la réaction de conversion à l'eau du CO )

Par ailleurs ces catalyseurs, lors des phases d'accélération ou de décélération du véhicule doivent travailler en atmosphère soit réductrice soit oxydante : le rapport massique air/carburant (génèralement appelé richesse ) peut varier dans une gamme, de fréquences et d'amplitudes, relativement large. Or, il est bien connu de l'homme de l'art que certains oxydes sont capables, selon le milieu environnant, de pouvoir évoluer entre au moins deux degrés d'oydation : citons par exemple le cas du cérium dont le degré d'oxydation peut facilement passer de la valeur 3 à la valeur 4 pour donner les oxydes Ce2O3 et CeO2. Cette propriétè, génèralement appelée "effet tampon", permet au catalyseur de stocker de l'oxygène lorsque le mélange air/essence est riche en air et, inversement, de le restituer lorsque le mélange est déficitaire en air, favorisant ainsi la combustion de l'oxyde de carbone et des hydrocarbures .

Il est connu par ailleurs d'utiliser des lanthanides pour améliorer la stabilité thermique et la résistance au vieillissement (surtout par frittage et du support poreux et des métaux ) des catalyseurs de post combustion. La cérine (CeO2), en plus de cette propriété, est très souvent utilisée pour son effet promoteur de la réaction de conversion à l'eau du CO, ainsi que pour son rôle de stockage de l'oxygène (effet tampon) (US 4,283,308 et US 4,675,308).

A cette cérine sont souvent ajoutés d'autres oxydes soit pour accroître sa capacité et/ou sa vitesse de respiration, soit pour limiter son frittage (brevets US 4,378,307 ; F 2568143 ; EP 262.962A).

Il est également proposé, de déposer préfèrentiellement chacun des métaux sur des oxydes différents, par exemple, le rhodium sur une alumine non dopée cérium, alors que le platine et/ou le palladium peuvent être imprégnés en partie ou en totalité sur une alumine "dopée" cérium ; il est à noter que les alumines peuvent aussi renfermer d'autres agents de stabilisation tels que des métaux alcalins ou alcalino-terreux (Ba, Sr ) ainsi que des métaux pouvant jouer le rôle de promoteur d'activité tels que Ni, Co, Fe, Cu, ... (US 4,738,947) .

Pour des carburants renfermant des composés soufrés, il est également proposé de monter, sur la ligne d'échappement du moteur, des catalyseurs dont le support poreux d'alumine renferme de l'uranium. L'uranium en combinaison avec les métaux du groupe du platine sur le support alumine contribuerait à améliorer très nettement les performances du catalyseur (brevet US 4,323,542).

Dans un domaine différent d'utilisation, le brevet US 3,993,459 décrit l'utilisation d'un catalyseur pour la conversion haute température des hydrocarbures, consistant : en oxyde de cérium, en oxyde d'uranium, en oxyde de thorium, combinés à de l'oxyde de lanthane, à de l'oxyde de cobalt, et à de l'oxyde de nickel. Ce catalyseur n'est cependant pas actif dans le traitement des gaz d'échappement des véhicules automobile et notamment à très faible température, par exemple à moins de à 350 °C.

Enfin, l'art antérieur est illustré par les brevets US-A-4323 542, FR-A- 2269 374, FR-A-2269 374, FR-A-2466 278, US-A-4675 308 et US-A-4221 768.

2

L'objet de cette invention est d'améliorer l'efficacité notamment l'efficacité à basse température laquelle conditionne le démarrage du catalyseur (light-off) lors d'un départ à froid du véhicule, ainsi que la stabilité des catalyseurs de post combustion et plus particulièrement ceux utilisés pour les engins automobiles (essence ou diesel) qui travaillent dans des conditions de fonctionnement sévères, à savoir :

- fortes températures et teneurs en vapeur d'eau élevée, conditions qui favorisent généralement le frittage des supports et des métaux, ce qui occasionne une désactivation du catalyseur ;
- variations importantes de la richesse (R) du mélange air/carburant (en amplitude et en fréquence), ce qui nécessite une activité importante de la phase tampon pour pouvoir rapidement, stocker ($R \leqq 1$ en milieu oxydant) et relibérer ($R \geqq 1$ en milieu réducteur) une quantité maximum d'oxygène, nécessaire à l'oxydation du monoxyde de carbone et des hydrocarbures imbrulés lorsque le mélange air-carburant est riche en hydrocarbures ($R \geqq 1$).

La sévérité de cette derniére condition est maximum avec les moteurs, fonctionnant généralement avec des richesses de mélange air-carburant inférieures à 1 (R=0.8 à 1), et non équipés de système de régulation électronique de richesse (sonde lambda). Ceci exige donc, en plus de la stabilité, du support et de la dispersion des métaux de la phase catalytiquement active, une amélioration de la capacité de l'activité et de la stabilité de la phase tampon. Or il a été découvert que, d'une façon surprenante, il était possible de préparer des catalyseurs présentant des propriétés d'usage améliorées, en introduisant dans lesdits catalyseurs le couple bimétallique cérium + uranium selon les modalités et dans les proportions qui sont indiquées ci-après.

Comme il est connu de l'homme de métier, les catalyseurs pour postcombustion automobile sont préparés :

. Soit par enduction d'un monolithe céramique et/ou métallique par une suspension aqueuse contenant essentiellement des oxydes métalliques, éventuellement des métaux précieux comme ci-après, séchage, activation thermique, éventuellement dépôt de métaux précieux puis éventuellement séchage et activation thermique. Le dit monolithe est alors revêtu d'une couche poreuse, comprenant les oxydes métalliques et les métaux précités.

. Soit par au moins une imprégnation de support préformé en grains par au moins une solution aqueuse de composés solubles des éléments métalliques et/ou des métaux précieux précités, au moins un séchage et au moins une activation thermique.

Le support préformé peut être sous forme de billes ou encore sous forme d'extrudés.

La demanderesse décrit ci-après la préparation de catalyseurs, sous forme monolithique, correspondant à l'invention mais il va de soi que des catalyseurs selon l'invention peuvent de même être préparés sur supports en billes ou en extrudés comme ci avant. Le cérium et l'uranium sont déposés sous forme d'oxydes et/ou de précurseurs d'oxydes sur le support céramique ou métallique, de structure monolithique, en nid d'abeille ou sous une autre forme. Les précurseurs de ces deux oxydes peuvent être introduits, soit par imprégnation d'au moins un composant (alumine, silice, silice-alumine, zéolithe, oxyde de titane...) de la charge d'enduction, soit par ajout sous forme de pigments ou de précurseurs d'oxyde dans la suspension d'enduction, soit encore par imprégnation du monolithe enduit, avant et/ou pendant, et/ou aprés celle des métaux précieux.

La phase active (Pt, Rh, Pd, Ru, Ir, et éventuellement Au, Ag) peut être introduite, en totalité ou en partie, lors des étapes précédentes (soit par imprégnation d'un composant de la charge d'enduction ou soit par introduction dans la suspension) ou imprégnée, en totalité ou en partie sur le monolithe enduitpuis éventuellement traité thermiquement.

L'invention concerne donc un catalyseur multifonctionnel pour la conversion du monoxyde de carbone, des hydrocarbures et des oxydes d'azote, comprenant un substrat revêtu d'une couche poreuse contenant une phase catalytiquement active comprenant, au moins, un métal M choisi dans le groupe formé par le platine, le rhodium, le palladium, le ruthénium, l'iridium, l'or, l'argent, et leurs mélanges, caractérisé en ce que la couche poreuse consiste essentiellement en :

- 20 % à 99 % d'au moins un oxyde inorganique réfractaire,
- 0.8 % à 70 % d'au moins un oxyde de cérium,
- 0.1 % à 50 % d'au moins un oxyde d'uranium,
- 0.1 % à 20 % dudit métal M.

Ces pourcentages masse sont exprimés par rapport au produit anhydre. La demanderesse a constaté que l'ajout d'oxyde d'uranium et d'oxyde de cérium à de l'alumine sur un suppport céramique ou métallique (généralement de type monolithique à structure en nid d'abeille) améliorait nettement l'activité et la stabilité (effet de synergie) du catalyseur de post-combustion par rapport à un catalyseur ne contenant qu'un de ces deux metaux (Ce ou U). Cette amélioration est d'autant plus importante que :

- le catalyseur travaille avec des gaz issus de la combustion d'un mélange air/carburant dont les variations de richesse autour de la valeur 1 sont importantes et de périodes élevées.
- le catalyseur fonctionne le plus souvent en milieu légèrement oxydant (moteur fonctionnant à richesse voisine de 0.8 à 1 et non équipé de sonde électronique pour la régulation de cette richesse).

3

De maniére avantageuse, la couche poreuse consiste essentiellement en :
- 30 % à 95 % d'au moins un oxyde inorganique réfractaire,
- 4.3 % à 50 % d'au moins un oxyde de cérium,
- 0.5 % à 30 % d'au moins un oxyde d'uranium,
- Au moins un métal précieux choisi dans le groupe formé par Pt, Rh, Pd, Ru, Ir, Au et Ag , lequel représente avantageusement environ 0.2 % à environ 8% en poids par rapport à la couche poreuse et de préférence, environ 0.5 % à environ 5 %.

Les valeurs ci dessous sont exprimées en % masse par rapport à la masse de couche poreuse après calcination sous air à 800 °C pendant 4 heures.

La masse de la couche poreuse correspond en général à une quantité de 20 g à 200 g de matiére par litre de substrat et avantageusement de 50 à 150 g par litre de substrat.

On a constaté qu'avec des teneurs préférées en oxyde de cérium comprises entre 10 et 40 %, d'oxyde d'uranium comprises entre 2 et 20 %, et de métal précieux de 0.5 à 4 %, on obtenait d'excellents résultats en termes de stabilité des performances, d'activités en oxydation et réduction des différents polluants, pour des masses préférées de la couche poreuse comprises entre 70 et 130 g par litre de substrat.

Il est possible que la phase active, généralement composée par les métaux du groupe du platine (Pt, Rh, Pd, Ru, Ir) ainsi que par Re, Au, Ag, soit en partie ou en totalité déposée sur un ou plusieurs oxydes composant la couche poreuse avant enduction.

L'oxyde inorganique réfractaire est généralement choisi dans le groupe formé par au moins un des composés ci-après : l'alumine $\alpha$, l'alumine $\beta$, l'alumines $\gamma$, l'alumine $\delta$, l'alumine $\kappa$, l'alumine $\chi$, l'alumine $\theta$, la silice, la silice-alumine, les zéolithes, l'oxyde de titane, et leurs combinaisons, les oxydes mixtes, ou une solution solide, comprenant au moins deux des oxydes précités. On préfère utiliser les alumines qui présentent à la fois une surface spécifique assez importante et une stabilité thermique acceptable.

L'invention concerne aussi la préparation d'un catalyseur multifonctionnel. Elle comprend les étapes suivantes :

a)- on prépare un mélange d'au moins un oxyde inorganique réfractaire et/ou d'au moins un des ses précurseurs, d'au moins un oxyde d'uranium et/ou de l'un ses précurseurs, d'au moins un oxyde de cérium ou de l'un ses précurseurs, d'un sel d'au moins un métal de la phase active, avantageusement déposé sur au moins un de ces oxydes,

b)- on met le mélange en suspension, de préférence dans une solution à pH compris entre environ 2 et environ 9,

c)- on enduit le substrat par la suspension de façon à obtenir le précurseur de la couche poreuse,

d)- on sèche et on effectue un traitement thermique à une température inférieure à 1000 °C.

Selon un autre mode de préparation, le catalyseur selon l'invention peut être obtenu de la façon suivante :

a)- on prépare un mélange d'au moins un oxyde inorganique réfractaire, et/ou d'au moins un de ses précurseurs, d'au moins un oxyde d'uranium et/ou d'au moins une partie de l'un de ses précurseurs, d'au moins un oxyde de cérium et/ou d'au moins une partie de l'un de ses précurseurs et éventuellement d'un sel d'au moins un métal de la phase active, avantageusement déposé sur au moins de ces oxydes,

b)- on met le mélange en suspension, de préférence dans une solution à pH compris entre environ 2 et environ 9,

c)- on enduit le substrat par la suspension de façon à obtenir la couche poreuse,

d)- on sèche et on effectue un traitement thermique à une température inférieure à 1000 °C.

e)- on effectue, au moins une fois, les 2 étapes successives suivantes :

* on imprégne sur la couche poreuse, la partie restante des sels précurseurs des dits oxydes de cérium et d'uranium et/ou soit le sel de métal de la phase active, soit la partie restante de ce sel s'il a été, en partie, introduit lors de l'étape a),

* on séche et on effectue un traitement thermique à une température inférieure à 1000 °C.

Selon un autre mode de préparation, le catalyseur selon l'invention peut être obtenu de la façon suivante :

a)- on imprégne une partie au moins d' au moins un oxyde inorganique réfractaire par au moins une partie d'au moins un des sels precurseurs des oxydes de cérium et/ou d'uranium et/ou du métal M de la phase active, avantageusement déposé sur au moins un de ces oxydes,

b)- on sèche et on effectue un traitement thermique à une température inférieure à 1000 °C,

c)- on met l'oxyde inorganique imprégné par les différents précurseurs définis ci-dessus en suspension, de préférence dans une solution à pH compris entre environ 2 et environ 9, avec éventuellement au moins une partie d'au moins un oxyde de cérium, éventuellement d'au moins un oxyde d'uranium et éventuellement d'au moins une partie d'au moins un sel de métal M de la phase active,

d)- on enduit le substrat par la suspension de façon à obtenir la couche poreuse,

e)- on sèche et on effectue un traitement thermique à une température inférieure à 1000 °C.

f)- on effectue, au moins une fois, les 2 étapes successives suivantes :

* on imprègne sur la couche poreuse, la partie restante des sels précurseurs des dits oxydes de cérium et d'uranium et/ou soit le sel de métal de la phase active, soit la partie restante de ce sel s'il a été, en partie, introduit lors de l'étape d'enduction.
* on sèche et on effectue un traitement thermique à une température inférieure à 1000 °C.

Selon une caractéristique secondaire du mode de préparation, le mélange obtenu peut être dispersé dans une alumine de grande surface spécifique et facilement peptisable, appelée alumine liante, de stucture cristallographique (boehmite ou pseudo-boehmite) différente de celle de l'alumine charge.

Les catalyseurs de la présente invention peuvent être préparés à partir de supports préformés, constitués de billes, pastilles ou extrudés dont le diamètre et/ou la longueur est comprise entre 1 et 10 mm. Cependant il est souvent préfèrable d'utiliser un support rigide de type monolithique en céramique, ou en métal, ou en autres matériaux tels que carbures, nitrures,..., dont la structure est alvéolée, par exemple en nid d'abeille ; ces supports présentent les avantages d'être moins sensibles à une détèrioration par attrition mécanique et, d'opposer une perte de charge moindre à la sortie des gaz .

Ces monolithes peuvent être :

- soit en céramique : constitués alors de matériaux cristallisés d'au moins pour partie tels que l'alumine, la sillimanite, le silicate de magnésium, la zircone, la pétalite, le spoduméne, la cordiérite, des aluminosilicates, la mullite ou la combinaison de plusieurs de ces composés,
- soit en carbure et/ou nitrure de silicium,
- soit en titanate d'aluminium,
- soit en métal : généralement obtenus à partir d'alliage de fer, de chrome et d'aluminium dopés éventuellement par du nickel, ou du cobalt, ou du cérium, ou de l'yttrium ; les plus connus ayant l'appellation FECRALLOY ou KANTHAL; Le métal du substrat peut être aussi un acier carboné.

On peut avantageusement traiter les substrats métalliques renfermant quelques pourcents d'aluminium par chauffage en atmosphère plus ou moins oxydante, des températures élevées (800 à 1200 °C) pendant des durées variables, ce qui permet de développer à partir de l'aluminium contenu dans l'alliage une couche superficielle d'alumine. Cette couche superficielle d'alumine, de surface et de porosité supérieures à celles du métal d'origine, favorise ainsi l'accrochage du dépot d'oxydes réfractaires de plus grande surface constituant la couche poreuse décrite ci-avant.

Ces supports sont ensuite, généralement recouverts par dépôt d'une fine couche d'oxydes constituant ladite couche poreuse dont la composition pondérale en matières sèches a été donnée ci-avant. Ce dépot peut être réalisé soit par trempage du support dans une suspension, soit par mise sous vide partiel, soit, en particulier pour les monolithes métalliques par pulvèrisation (à basse ou haute température et à pression atmosphérique ou sous vide), d'une suspension de ces oxydes (ou précurseurs), sur la tôle métallique avant mise en forme en monolithe, ou encore après mise en forme. L'épaisseur de cette couche pourra être comprise entre quelques microns et plusieures dizaines de microns. La surface spècifique initiale de la couche poreuse déposée est généralement comprise entre environ $20m^2/g$ et environ $300m^2/g$, et de préférence entre environ $50m^2/g$ et environ $200m^2/g$, afin de favoriser la dispersion initiale des métaux.

Les suspensions d'enduction, généralement riche en alumine, peuvent être préparées à partir :

- soit, selon le brevet EP 73703, du mélange de deux alumines de structure différentes : l'une étant une pseudo-boehmite peptisable généralement appellée liant, l'autre pouvant être une alumine gamma, delta, tétha ou alpha appelée alumine charge,
- soit d'un seul type d'alumine : boemithe (alumine dénommée PURAL de la sociétè CONDEA ), ou alumine gamma (ex:VERSAL GH de la société KAISER).
- soit de l'une ou de l'autre de ces préparations à laquelle on ajoute soit un sol d'alumine, soit un sel d'aluminium.

Selon l'invention, l'ajout simultané ou séparé des oxydes de cérium et d'uranium, ou de leur précurseurs, peut être réalisé à diverses étapes de la préparation des catalyseurs. Ils peuvent être introduits à l'état de pigment solide (oxydes, hydroxydes, carbonates, hydroxycarbonates ou encore sels insolubles) et/ou précurseurs solubles dans la suspension d'enduction, et/ou pré-imprégnés sur l'un des constituants la charge d'enduction, et/ou déposés sur la couche poreuse avant l'imprégnation des métaux, et/ou co-imprégnés avec les métaux.

A cette suspension d'alumine(s) et éventuellement d'oxydes (ou de précurseurs d'oxydes) de cérium et d'uranium peuvent être ajoutés les oxydes auxiliaires définis, comme ci-avant.

Pour augmenter la porosité de la couche poreuse, on peut ajouter à la suspension d'enduction, des produits porogènes (sciure de bois, gommes végétales, amidon, alkyl-celluloses, carbonates, xanthanes) qui, lors du traitement thermique, se décomposeront en créant, généralement, de la macro-porosité.

Aprés l'étape d'enduction, le monolithe est généralement séché puis traité thermiquement pour décomposer les sels de métaux en leurs oxydes. Selon les conditions opératoires de ce traitement (température, durée, nature de l'atmosphère, ..) il sera possible de faire évoluer les caractéristiques de la couche poreuse (structure cristallographique, surface spécifique, porosité, ..) vers un état favorable, à une bonne dispersion des métaux, mais aussi à une bonne résistance au frittage.

L'activité catalytique est essentiellement apportée par les métaux précieux dont les principaux sont Pt, Pd, Rh, mais aussi Ru, Ir, Re, Au, Ag...), ils peuvent être introduits soit, avec l'alumine de charge (US 4.675.308), soit par imprégnation sur le monolithe enduit.

Comme il est connu de l'homme de métier, différentes méthodes d'imprègnation peuvent être utilisées :

- imprégnation à sec, en utilisant un volume de solution, du ou des précurseurs métalliques désirés, égal ou inférieur au volume poreux du support enduit puis activé thermiquement.
- imprégnation par échange en utilisant un volume de solution, des sels métalliques, très supérieur au volume de la porosité du dit support enduit. Cette imprégnation peut être faite en statique ou en dynamique, à pression atmosphérique ou sous vide, avec ions compétiteurs ou non.

Aprés cette étape d'imprégnation, le monolithe, éventuellement égoutté, est séché puis traité thermiquement en milieu oxydant (air plus ou moins dilué dans de l'azote), ou neutre (sous azote), ou réducteur (hydrogène et/ou oxyde de carbone dilué par un gaz neutre, ou encore dans un gaz de combustion). Les températures de traitement peuvent être comprises entre 450 et 950 °C mais, d'une manière préférée, elles sont de l'ordre de 450 à 700°C.

Dans les exemples qui vont suivre, différents modes de préparation des catalyseurs sont donné à titre illustratif :

- mélange (selon procédè décrit dans le brevet EP 73703 ) d'une alumine charge (alumine $\gamma$ ) et d'une alumine liante (boehmite) ; l'alumine charge étant dans certains exemples, préalablement pré-imprégnée par des sels précurseurs d'oxydes (cérium et/ou uranium) et/ou de métaux précieux. Le rapport massique alumine charge sur alumine liante est égal à 5.33.
- préparation de la suspension en versant le mélange des poudres dans une solution diluée d'acide nitrique afin de peptiser en partie ou en totalité l'alumine liante. Le pH de la suspension est ajusté à 5,
- trempage du monolithe dans la suspension puis égouttage et soufflage.
- séchage et traitement thermique du monolithe enduit, sous air, entre 25 et 700 °C.
- addition éventuelle des oxydes d'uranium et/ou de cérium qui est réalisée par imprégnation à sec, d'une solution nitrique de nitrate cereux et/ou de nitrate d'uranyle, sur le monolithe enduit et calciné ; Aprés cette imprégnation, le produit est de nouveau séché et calciné selon la procédure définie ci dessus.
- imprégnation des précurseurs de métaux précieux (de préférence H2PtCl6 et RhCl3) sur le monolithe enduit, selon la méthode dite à sec: Un volume de solution égal au volume poreux du monolithe enduit est préparé par dissolution dans de l'eau, des quantités désirées des sels métalliques. Le monolithe enduit, est imprégné par cette solution métallique, séché à 200 °C, et enfin calciné à 600 °C sous air durant trois heures.

Les catalyseurs de l'invention, dont le mode de préparation est décrit dans les exemples ci dessous, se composent généralement :

- d'un monolithe céramique ou métallique,
- d'une couche poreuse (alumines et oxydes de cérium et d'uranium) d'environ 110g pour un volume de substrat (monolithe) de 1 litre,
- d'une phase métallique active composée de platine et/ou de rhodium et/ou de palladium dans un rapport massique Pt/Rh égal à 8 et dont la masse est précisément égale à 1.765g par litre de substrat.

Les exemples n° 2 et 3 ainsi que 11, 12 constituent les contre-exemples permettant d'apprécier la portée de l'invention.

Les catalyseurs selon l'invention apportent des performances améliorées dans les domaines d'utilisation ci-après :

- catalyse multifonctionnelle avec régulation de richesse bouclée, ladite richesse $\underline{R}$ étant régulée à R = 1 ± 0,01.
- catalyse multifonctionnelle sans régulation de richesse, ladite richesse R oscillant entre environ 0,75 et environ 1,20 autour d'une valeur moyenne comprise entre 0,85 et 0,95.
- catalyse d'oxydation, sans réglation de richesse, ladite richesse R oscillant entre environ 0,5 et environ 1,2 autour de la valeur moyenne 0,6 à 0,9 (les valeurs inférieures à 0,80 étant généralement rencontrées dans les moteurs diesel (R = 0,5-0,6) et dans les moteurs à mélanges pauvres (R = 0,65 - 0,75).

## EXEMPLE 1 (invention)

On disperse 150g d'alumine liante (boehmite) sous forme de poudre dans 2000 cm³ d'eau distillée et 800g d'alumine charge (alumine $\gamma$) de surface spécifique 110 m²/g ; ces deux types d'alumine sont préparés selon le procédè décrit dans le brevet EP 73703.

Un monolithe en céramique de 0.904 litre, vendu par la société CORNING et présentant une structure en nid d'abeille avec 62 cellules au cm², est plongé dans cette suspension dont le pH a étè ajusté à 5 par ajout d'acide nitrique. Le monolithe, égoutté et soufflé, (pour que les canaux soient vidés de l'excès de suspension), est séché puis calciné à 700 °C ; le poids de la couche poreuse déposée est de 80 g.

Ce substrat est ensuite imprègné par 180 cm³ d'une solution aqueuse de nitrate céreux et de nitrate d'uranyle renfermant l'équivalent de 15g d'oxyde cérique (CeO2) et 5g d'oxyde d'uranium (U3O8) puis séché et recalciné à 650 °C.

Ce support est de nouveau imprègné par 170 cm3 d'une solution aqueuse préparée, en ajoutant dans de l'eau, une solution d'acide hexachloroplatinique (H2PtCl6)à 25% en poids de platine, et du trichlorure de rhodium (RhCl3) hydraté; les quantités de métaux déposés sont respectivement, pour Rh et Pt, de 0.1773g et 1.4183g . Après 30 minutes de contact, le monolite est séché puis calciné à 600°C pendant 3 heures.

Les pourcentages massiques des différents èlèments de la couche poreuse, métaux précieux compris, sont les suivants:

- Al2O3 : 78.743 %
- CeO2 : 14.765 %
- U3O8 : 4.922 %
- Pt : 1.396 %
- Rh : 0.174 %

EXEMPLE 2 (comparatif)

On reproduit exactement le catalyseur décrit dans l'exemple 1, sauf qu'il ne contient que de l'oxyde de cérium : la quantité déposée sur la la couche poreuse est de 20 g.

Les pourcentages massiques des différents èlèments de la couche poreuse, métaux précieux compris, sont les suivants :

- Al2O3 : 78.744 %
- CeO2 : 19.686 %
- U3O8 : 0.000 %
- Pt : 1.396 %
- Rh : 0.174 %

EXEMPLE 3 (comparatif)

Les diverses opérations d'enduction et d'imprégnation sont réalisées de la même manière et avec les mêmes quantités de produits que dans l'exemple 2 à l'exception que la couche poreuse (80 g) est imprégnée par du nitrate d'uranyle au lieu de nitrate de cérium: (équivalent de 20 g d'oxyde d'uranium U3O8).

Les pourcentages massiques des différents èlèments de la couche poreuse, métaux précieux compris, sont les suivants :

- Al2O3 : 78.744 %
- CeO2 : 0.000 %
- U3O8 : 19.686 %
- Pt : 1.396 %
- Rh : 0.174 %

EXEMPLE 4 (invention)

On imprégne 1000g de billes d'alumine (gamma) de surface 120 m²/g par 1150 cm³ d'une solution de nitrate de cérium renfermant l'équivalent de 230.8 g d'oxyde de cérium (CeO2) . Cette alumine dopée est séchée, calcinée à 650 °C pendant 3 heures, et broyée à une granulométrie moyenne de quelques microns.

On disperse 150 g de liant d'alumine sous forme de poudre dans 2000 cm³ d'eau distillée et 800 g de cette alumine charge, dopée cérium.

On plonge un monolithe en céramique de 0.904 litre dans cette suspension dont le pH a étè ajusté à 5 par ajout d'acide nitrique. Le monolithe, égoutté et soufflé, est séché puis calciné à 650 °C, la masse de la couche poreuse déposée est de 95 g.

Le monolithe est ensuite imprégné par 170 cm³ d'une solution aqueuse de nitrate d'uranyle renfermant l'équivalent de 5 g d'oxyde d'uranium, puis séché et recalciné à 650 °C.

Ce support est imprégné comme ci-dessus par les 160 cm³ de la solution aqueuse contenant les précurseurs métalliques ; les quantités de métaux déposés sont toujours, pour Rh et Pt, de 0.1773 g et 1.4183 g. Après 30 minutes de contact, le monolite est séché puis calciné à 600 °C pendant 3 heures.

Les pourcentages massiques des différents élèments de la couche poreuse, métaux précieux compris, sont les suivants :
- Al2O3 : 78.750 %
- CeO2 : 14.760 %
- U3O8 : 4.920 %
- Pt : 1.396 %
- Rh : 0.174 %

EXEMPLE 5 (invention)

On prépare le catalyseur comme dans l'exemple 4 à l'exception cependant que :
- l'on imprègne les 1000 g de billes d'alumine (gamma) de surface 120 m²/g par 1150 cm³ d'une solution de nitrate d'uranyle renfermant l'équivalent de 76 g d'oxyde d'uranium (U3O8) .
- et que le monolithe, recouvert par 85 g de la couche poreuse, est ensuite imprégné par 170 cm³ d'une solution aqueuse de nitrate céreux renfermant l'équivalent de 15 g d'oxyde cérique (CeO2) . Le substrat séchè, calciné est de nouveau imprégné par la solution de métaux précieux selon les mêmes conditions opèratoires que ci dessus.

Les pourcentages massiques des différents élèments de la couche poreuse, métaux précieux compris, sont les suivants :
- Al2O3 : 78.700 %
- CeO2 : 14.760 %
- U3O8 : 4.970 %
- Pt : 1.396 %
- Rh : 0.174 %

EXEMPLE 6 (invention)

Dans cet exemple le cérium et l'uranium sont préalablement imprégnés sur l'alumine de charge :

On imprègne 1000 g de bille d'alumine (gamma) par 1150 cm³ d'une solution de nitrate d'uranyle et de nitrate de cérium renfermant l'équivalent de 78.4 g d'oxyde d'uranium (U3O8) et 235.2 g d'oxyde de cérium. Cette alumine dopée est séchée, calcinée à 650 °C pendant 3 heures, et broyée à une granulométrie moyenne de quelques microns.

On disperse 150 g de liant d'alumine sous forme de poudre dans 2000 cm³ d'eau distillée et 800 g de cette alumine charge dopée uranium-cérium.

Après enduction, selon les conditions opératoires définies ci dessus, d'un monolithe en céramique de 0.904 litre puis séchage et calcination à 650 °C (la masse de la couche d'enduction est de 99.5 g), on imprègne ce support par 160 cm³ d'une solution aqueuse renfermant les précurseurs chlorés du Rhodium et du Platine. Ce catalyseur, séché puis calciné à 600 °C renferme : 0.1773 g de Rh, 1.4183g de Pt, 5g de U3O8 et 15 g de CeO2.

Les pourcentages massiques des différents élèments de la couche poreuse, métaux précieux compris, sont les suivants :
- Al2O3 : 78.632 %
- CeO2 : 14.840 %
- U3O8 : 4.950 %
- Pt : 1.403 %
- Rh : 0.175 %

EXEMPLE 7 (invention)

On plonge un monolithe de 0.904 l dans une suspension acidifiée contenant 150 g de liant d'alumine et 800 g d'alumine charge.

Après égouttage, séchage et calcination à 700 °C, ce support enduit (80 g d'alumine) est imprégné par 170 cm³ d'une solution aqueuse préparée en ajoutant dans de l'eau, une solution d'acide hexachloroplatinique à 25 % en poids de platine, du tri chlorure de rhodium, des nitrates de cérium et d'uranyle ; les quantités de métaux déposés sont respectivement, pour Rh et Pt, de 0.1773 g et 1.4183 g et, pour Ce et U, l'équivalent de 15 g en CeO2 et de 5 g en U3O8.

Après 30 minutes de contact le monolithe est séché puis calciné à 600 °C pendant 3 heures.

Les pourcentages massiques des différents élèments de la couche poreuse, métaux précieux compris, sont les suivants :
- Al2O3 : 78.750 %
- CeO2 : 14.760 %
- U3O8 : 4.920 %
- Pt : 1.396 %
- Rh : 0.174 %

EXEMPLE 8 (invention)

Pour cet essai nous avons utilisé un monolithe métallique de la sociétè allemande BEHR. Les caractéristiques de ce support sont les suivantes :
- diamétre = 124 mm
- hauteur = 74.5 mm soit un volume de 0.899 litre
- épaisseur de la paroi = 40 microns
- nombre de cellules = 62/cm$^2$

Aprés avoir subi un traitement oxydant pour favoriser en surface la formation d'une fine péllicule d'alumine qui permettra un meilleur accrochage de la couche poreuse le monolithe est plongé dans une suspension de composition identique à celle définie dans l'exemple 6, à l'exception près que le volume d'eau engagé est doublé ; la modification de ce paramètre nous oblige à répéter plusieures fois cette opération d'enduction.

Le support métallique enduit (99 g de couche poreuse), séché et calciné à 650 °C, est imprégné par 145 cm$^3$ d'une solution de chlorure de rhodium et d'acide hexachloroplatinique. Calciné à 600 °C , le catalyseur renferme 1.4183 g de Pt et 0.1773 g de Rh.

Les pourcentages massiques des différents élèments de la couche poreuse, métaux précieux compris, sont les suivants :
- Al2O3 : 78.674 %
- CeO2 : 14.800 %
- U3O8 : 4.940 %
- Pt : 1.410 %
- Rh : 0.176 %

EXEMPLE 11 (comparatif)

Un monolithe en céramique, de 0.904 litre, est enduit, selon la methode décrite dans l'exemple 1, par une suspension d'alumines. Après séchage, calcination, la couche poreuse (90 g) est imprégnée par une solution renfermant les nitrates de cobalt, nickel, lanthane, cerium, thorium et uranyle: les équivalents oxyde de chacun des sels mis en solution sont respectivement de : 2.5 g, 0.3 g, 6.5 g, 1.5 g, 1.2 g et 0.2 g. Il est à noter que ce catalyseur ne renferme aucun métaux précieux.

Aprés séchage et calcination 2 heures à 800 °C, la composition pondérale de la couche poreuse imprégnée est la suivante :
- Al2O3 : 88.063 %
- La2O3 : 6.360 %
- CoO : 2.446 %
- NiO : 0.293 %
- U3O8 : 0.196 %
- CeO2 : 1.468 %
- ThO2 : 1.174 %
- Pt : 0.000 %
- Rh : 0.000 %

EXEMPLE 12 (comparatif)

Un monolithe est enduit dans les mêmes conditions que dans l'exemple 11 puis imprégné avec la même solution des différents nitrates. Après calcination à 800 °C, le monolithe est de nouveau imprégné comme dans l'exemple 1 par une solution des précurseurs chlorés des métaux précieux.

La composition de la couche poreuse aprés calcination à 600 °C pendant 3 heures est la suivante :
- Al2O3 : 86.709 %

9

- La2O3 : 6.262 %
- CoO : 2.408 %
- NiO : 0.289 %
- U3O8 : 0.193 %
- CeO2 : 1.445 %
- ThO2 : 1.156 %

et

- Pt : 1.366 %
- Rh : 0.171 %

EXEMPLE 13 (invention)

On prépare un catalyseur selon le mode opératoire de l'exemple 1, sauf que les quantités en oxyde de cérium et en oxyde d'uranium sont différentes et qu' il ne contient qu'un seul métal actif : le platine.

Les pourcentages massiques des différents élèments de la couche poreuse, métaux précieux compris, sont les suivants :

- Al2O3 : 86.624 %
- CeO2 : 9.456 %
- U3O8 : 2.350 %
- Pt : 1.570 %
- Rh : 0.000 %

EXEMPLE 14 (invention)

On prépare un catalyseur selon le mode opératoire de l'exemple 1, sauf que les quantités en oxyde de cérium et en oxyde d'uranium sont différentes et que les métaux actifs sont : le palladium et le rhodium.

Les pourcentages massiques des différents élèments de la couche poreuse, métaux précieux compris, sont les suivants :

- Al2O3 : 60.428 %
- CeO2 : 28.250 %
- U3O8 : 10.380 %
- Pd : 0.754 %
- Rh : 0.188 %

EXEMPLE 15 (invention)

On prépare un catalyseur selon le mode opératoire de l'exemple 1, sauf que les quantités en oxyde de cérium et en oxyde d'uranium sont différentes et que les métaux actifs sont: le platine, le palladium, le rhodium.

Les pourcentages massiques des différents élèments de la couche poreuse, métaux précieux compris, sont les suivants :

- Al2O3 : 77.730 %
- CeO2 : 8.350 %
- U3O8 : 12.350 %
- Pt : 0.931 %
- Rh : 0.174 %
- Pd : 0.465 %

EXEMPLE 16 (test Banc Moteur)

Tous ces catalyseurs, ainsi préparés, sont montés sur des systémes (bancs moteurs) qui permettent de tester leurs activités à l'état, neuf et vieilli ; le vieillissement étant réalisé d'une façon accélérée.

La procédure de vieillissement des catalyseurs est la suivante :

- 1 minute à 50 Km/h,
- montée à 150 Km/h et palier pendant 1 minute,
- descente à 50 Km/h et injection d'air pendant 20 secondes,
- redémarrage du cycle.

La durée de cette étape de vieillissement est de 200 heures et les températures atteintes sont de l'ordre de 880 °C. Les catalyseurs sont montés sur la ligne d'échappement d'un moteur de 1,8 litre de cylindrée (Renault 21), équipé d'un carburateur (donc pas de régulation électronique de richesse) et réglé de telle manière que la richesse moyenne du mélange air - carburant soit de 0.90.

Les performances de chacun des catalyseurs sont évaluées avant et après vieillissement sur un autre banc moteur (moteur de même cylindrée) équipé cette fois d'un systéme de régulation de richesse pouvant fonctionner en régime pulsé avec variations du rapport air/carburant en amplitude et en fréquence. Un systéme (radiateur) permet de réguler la température des gaz d'échappement avant passage sur le catalyseur.

a)- les conditions du premier test de mesure d'activité sont les suivantes :

On détermine les efficacités de chaque catalyseur, pour une température et une vitesse spatiale (VVH) données, en faisant varier la richesse du mélange air-carburant entre deux valeurs.
- température : 450 °C (entrée catalyseur),
- vitesse spatiale : 50000 h-1,
- richesse : 0.95 à 1.05,

L'efficacité du catalyseur, vis à vis d'un réactif sera calculée à partir de l'équation.

$$E(CO)\ \% \ = \ 100\ X \left[ \begin{array}{c} R=1.05 \\ \\ \\ R=0.95 \end{array} \right. \qquad (\% \ Conversion\ CO)$$

Les efficacités déterminées, vis à vis des principaux réactifs, avec les différents catalyseurs, l'état neuf ou vieilli, sont rassemblées dans le tableau ci-dessous :

MONOLITHE(de type race track:RT3")-couche poreuse(110 g/litre environ)

   Métaux Précieux : en général

Pt/Rh = 8         (Pt + Rh = 1.765 g/litre de substrat)

(rap.massique)      soit environ 1.6 % pds par rapport à la couche poreuse

   Sauf pour exemples : 11(sans M), 13(Pt seul)

        14 (Pd + Rh = 1.042g/l)

        15(Pt+Rh+Pd)

| Catalyseurs (N° exemple) | % poids | | NEUFS | | | VIEILLIS | | |
|---|---|---|---|---|---|---|---|---|
| | U308 | CeO2 | CO | NOx | HC | CO | NOx | HC |
| 1 (Ce + U)/M* | 4.92 | 14.76 | 83 | 62 | 84 | 78 | 57 | 81 |
| 2 (Ce/M) | 0 | 19.69 | 84 | 63 | 82 | 73 | 54 | 75 |
| 3 (U/M) | 19.69 | 0 | 75 | 58 | 78 | 64 | 50 | 70 |
| 4 ** (Ce/S-U/M) | 4.92 | 14.76 | 83 | 63 | 82 | 77 | 57 | 79 |
| 5 (U/S-Ce/M) | 4.97 | 14.76 | 82 | 58 | 83 | 77 | 54 | 80 |
| 6 (U + Ce/S) | 4.95 | 14.84 | 86 | 68 | 87 | 80 | 63 | 83 |
| 7 (U + Ce + Mtx/S) | 4.92 | 14.76 | 81 | 59 | 80 | 76 | 56 | 77 |
| 8 (M.métal.) | 4.84 | 14.80 | 84 | 66 | 86 | 79 | 61 | 83 |
| 11 (+Th+..) | 0.20 | 1.47 (autres = 9.74 %) (sans Pt, Rh) | 21 | 9 | 17 | 14 | 4 | 11 |
| 12 (+Th+...(autres = 10.27 %) +Pt,Rh) | 0.19 | 1.45 | 63 | 57 | 71 | 47 | 40 | 56 |
| 13. (Pt) | 2.35 | 9.46 | 80 | 55 | 87 | 74 | 50 | 82 |
| 14 (Pd-Rh) | 10.38 | 28.25 | 82 | 61 | 75 | 79 | 58 | 71 |
| 15 (Pt-Pd-Rh) | 12.35 | 8.35 | 81 | 63 | 81 | 77 | 58 | 77 |

\* M = Monolithe enduit.

\*\* S = Alumine charge.

On constate que pour les catalyseurs neufs, les efficacités mesurées en fonction des variations de richesse, sont, en général sensiblement équivalentes pour les catalyseurs contenant des métaux précieux.

Par contre, un vieillissement accéléré des catalyseurs, d'une durée de 200 heures a pour effet, de faire chuter plus fortement les efficacités des catalyseurs ne contenant pas, simultanément, les oxydes de cérium et d'uranium : par exemple, pour l'oxyde de carbone les pertes d'efficacité sont de 4 à 6 points au lieu d'une dizaine pour les catalyseurs renfermant l'un de ces deux oxydes.

Par ailleurs, les catalyseurs dont les teneurs en oxyde de cerium et d'uranium sont relativement faibles et qui renferment de l'oxyde de thorium, sont peu actifs, en particulier s'ils ne contiennent pas de métaux précieux. De plus la stabilité de leurs performances lors de l'étape de vieillissement semble inférieure à celle des catalyseurs de l'invention.

b)- Les conditions opératoires du second test de mesure d'activité en régime pulsé sont les suivantes :

On détermine les efficacités de chaque catalyseur, pour une température et une vitesse spatiale (VVH) données, en faisant varier, avec des fréquences variables, la richesse(R) du mélange air-carburant les valeurs de R étant symètriques par rapport à la richesse 1.

Les conditions opératoires sont les suivantes :
- température : 450 °C (entrée catalyseur),
- vitesse spatiale : 50000 h-1,
- richesse : 1 +/- 0.1,
- amplitude de richesse : +/- 0.1,
- fréquence des variations de richesse : de 0.25 à 10Hz.

L'efficacité du catalyseur, vis à vis d'un réactif sera calculée à partir de l'équation :

$$E(CO) \% = 100 \times \int_{P=0.10}^{P=4.0} \quad (\% \text{ Conversion CO})$$

$$(P = \text{période(s)} = 1/\text{fréquence})$$

Les valeurs de ces efficacités, déterminées vis à vis des principaux réactifs, avec les différents catalyseurs, dont les formulations sont définies ci dessus, à l'état neuf ou vieilli, sont rassemblées dans le tableau ci-dessous :

```
MONOLITHE (de type race track:RT3")-couche poreuse(110g/litre environ)
   Métaux Précieux:en général
   Pt/Rh=8                    (Pt+Rh = 1.765g/litre de substrat)
(rap.massique)          soit environ 1.6 % pds par rapport à la couche poreuse
                   Sauf pour exemples: 11(sans M),  13 (Pt seul)
                                       14 (Pd + Rh = 1.042g/1)
                                       15 (Pt+Rh+Pd)
```

| Catalyseurs (N° exemple) | % EFFICACITE ( 0.1 ≤ PERIODE ≤ 4.0 ) | | | | | | |
|---|---|---|---|---|---|---|---|
| | % poids | | NEUFS | | | VIEILLIS | | |

| Catalyseurs (N° exemple) | U3O8 | CeO2 | CO | NOx | HC | CO | NOx | HC |
|---|---|---|---|---|---|---|---|---|
| 1 (Ce+U)/M | 4.92 | 14.76 | 74 | 67 | 86 | 61 | 55 | 78 |
| 2 (Ce/M) | 0 | 19.69 | 71 | 64 | 81 | 53 | 48 | 69 |
| 3 (U/M) | 19.69 | 0 | 65 | 59 | 79 | 46 | 44 | 67 |
| 4 (Ce/S_U/M) | 4.92 | 14.76 | 72 | 66 | 85 | 59 | 54 | 75 |
| 5 (U/S_Ce/M) | 4.97 | 14.76 | 71 | 62 | 85 | 58 | 54 | 74 |
| 6 (U+Ce/S) | 4.95 | 14.84 | 77 | 70 | 88 | 66 | 61 | 79 |
| 7 (U+Ce+Mtx/S) | 4.92 | 14.76 | 72 | 63 | 84 | 59 | 52 | 73 |
| 8 (M.métal.) | 4.94 | 14.80 | 73 | 67 | 85 | 61 | 56 | 76 |
| 11 (+Th+..) | 0.20 (autres = 10.27 %) (sans Mtx précieux) | 1.468 | 15 | 3 | 8 | 7 | 2 | 5 |
| 12 (+Th+.. +Pt,Rh) | 1.445 (autres = 10.15 %) | 0.19 | 43 | 38 | 61 | 32 | 21 | 44 |
| 13 (Pt) | 2.35 | 9.46 | 70 | 64 | 88 | 59 | 53 | 81 |
| 14 (Pd-Rh) | 10.38 | 28.25 | 71 | 68 | 79 | 64 | 52 | 73 |
| 15 (Pt-Pd-Rh) | 12.35 | 8.35 | 76 | 67 | 83 | 63 | 56 | 75 |

On constate que, pour les catalyseurs neufs, les efficacités, calculées en fonction de l'inverse des fréquences des pulsations de richesse, sont sensiblement équivalentes pour les catalyseurs contenant du cérium et eventuellement de l'uranium mais, nettement plus faible pour le catalyseur ne contenant que l'uranium. Après vieillissement, et en particulier pour les réactifs CO et hydrocarbures, les catalyseurs contenant les deux oxydes (CeO2 et U3O8) conservent une efficacité supérieure à celle des catalyseurs ne contenant que l'un de ces deux oxydes ; (pour CO la baisse d'efficacité est de 13 points avec les deux oxydes réunis et, de 19 points lorsqu'ils sont séparés).

Ces résultats mettent en évidence l'effet de synergie qu'apporte la combinaison de ces deux oxydes sur la résistance du catalyseur au vieillissement, par rapport aux catalyseurs contenant un pourcentage massique equivalent de l'un ou l'autre de ces oxydes. Le mode de préparation conduisant au catalyseur le plus performant semble également être celui où la charge d'alumine utilisée pour la préparation de la suspension d'enduction est pré-imprégnée par les précurseurs des deux oxydes.

Comme dans le test ci dessus, les catalyseurs contenant des quantités faibles en cerium et uranium, mais renfermant du thorium, présentent une activité en conversion de CO, NOx, HC d'autant plus faible qu'ils ne renferment pas de métaux précieux.

Par ailleurs, on constate que les catalyseurs de même formulation, mais préparés sur un support, soit céramique, soit métallique, conduisent sensiblement aux mêmes performances .

EXEMPLE 17

Dans cet essai les catalyseurs préparés dans les exemples 1, 2 et 3 sont testés et vieillis selon les conditions définies dans l'exemple 12 à l'exception que ce vieillissement est réalisé avec un moteur équipé d'une sonde lambda permettant de réguler la richesse du mélange air/carburant à la valeur de 1.

Les efficacités mesurées sur ces catalyseurs neufs et vieillis, en fonction soit de la richesse, soit de la periode des variations de richesse, sont résumées dans le tableau ci-dessous.

| Catalyseurs (N° exemple) | | % EFFICACITE $( 0.95 \leqslant$ RICHESSE $\leqslant 1.05 )$ | | | | | | |
|---|---|---|---|---|---|---|---|---|
| | % poids | | | NEUFS | | | VIEILLIS | |
| | U308 | CeO2 | CO | NOx | HC | CO | NOx | HC |
| 1 (Ce+U) | 4.92 | 14.76 | 83 | 62 | 84 | 80 | 59 | 82 |
| 2 (Ce/M) | 0 | 19.69 | 84 | 63 | 82 | 76 | 56 | 79 |
| 3 (U/M) | 19.69 | 0 | 75 | 58 | 78 | 68 | 51 | 72 |

| Catalyseurs (N° exemple) | | % EFFICACITE $( 0.10 \leqslant$ PERIODE $\leqslant 4.0 )$ | | | | | | |
|---|---|---|---|---|---|---|---|---|
| | % poids | | | NEUFS | | | VIEILLIS | |
| | U308 | CeO2 | CO | NOx | HC | CO | NOx | HC |
| 1 (Ce+U)/ M | 4.92 | 14.76 | 74 | 67 | 86 | 65 | 58 | 79 |
| 2 (Ce/ M | 0 | 19.69 | 71 | 64 | 81 | 57 | 53 | 73 |
| 3 (U/ M | 19.69 | 0 | 65 | 59 | 79 | 48 | 46 | 70 |

Comparés aux résultats ci dessus on constate qu'un fonctionnement à richesse = 1 sans fluctuation importante de cette richesse limite la perte d'efficacité pour les 3 catalyseurs, en particulier pour les catalyseurs contenant du cérium. Cependant, le catalyseur, renfermant les deux oxydes, reste le plus efficace pour la conversion des différents polluants.

L'ensemble de ces résultats permettent donc de mettre en évidence l'effet de synergie, dû à l'addition simultanée des oxydes de cérium et d'uranium, sur l'amélioration de l'efficacité du catalyseur lorsque ce dernier fonctionne plus particuliérement avec des variations de richesses, en amplitude et en fréquence, assez importantes.

## Revendications

**1.** Catalyseur multifonctionnel, pour la conversion du monoxyde de carbone, des hydrocarbures et des oxydes d'azote, comprenant un substrat revêtu d'une couche poreuse qui renferme au moins une phase catalytiquement active composée d'au moins un métal M choisi dans le groupe forme par le platine, le rhodium, le palladium, le ruthenium, l'iridium, l'or, l'argent, et leur mélanges, caractérisé en ce que la couche poreuse consiste essentiellement en :
- 20 % à 99 % d'au moins un oxyde réfractaire
- 0.8 % à 70 % d'au moins un oxyde de cérium,et
- 0.1 % à 50 % d'au moins un oxyde d'uranium,et
- 0.1 % à 20 % du dit métal M,

les pourcentages en masse étant exprimés par rapport au produit anhydre.

**2.** catalyseur selon la revendication 1 dans lequel la couche poreuse consiste essentiellement en :
- 30 % à 95 % d'au moins un oxyde réfractaire
- 4.3 % à 50 % d'au moins un oxyde de cérium et
- 0.5 % à 30 % d'au moins un oxyde d'uranium, et
- 0.2 % à 8 % dudit métal M.

**3.** catalyseur selon l'une des revendication 1 à 2, dans lequel l'oxyde de réfractaire est choisi dans le groupe formé par l'alumine $\alpha$, l'alumine $\beta$, l'alumine $\delta$, l'alumine $\theta$, l'alumine $\gamma$, l'alumine $\kappa$, l'alumine $\chi$, la silice la silice-alumine, les zéolithes, l'oxyde de titane, et leurs mélanges.

**4.** catalyseur, selon l'une des revendications 1 à 3, caractérisé en ce qu'il comprend au moins un métal choisi dans le groupe formé par le platine, le rhodium et le palladium.

**5.** catalyseur selon l'une des revendications 1 à 4 dans lequel le substrat est en matiére céramique ou métallique.

**6.** catalyseur selon l'une des revendications 1 à 5 dans lequel le substrat est de forme monolithique à structure en nid d'abeille.

**7.** catalyseur selon l'une des revendications 1 à 6 dans lequel la couche poreuse est introduite en une quantité comprise entre 20 et 200 g par litre de substrat et de préférence entre 50 et 150 g par litre de substrat.

**8.** procédé de préparation d'un catalyseur selon l'une des revendications 1 à 7, caractérisé en ce que :
a) on prépare un mélange d'au moins un oxyde inorganique réfractaire et/ou d'au moins un de ses précurseurs, d'au moins un oxyde d'uranium et/ou de l'un ses précurseurs, d'au moins un oxyde de cérium ou de l'un ses précuseurs, d'un sel d'au moins un métal de la phase active, avantageusement déposé sur au moins un de ces oxydes,
b)- on met le mélange, en suspension, de préférence dans une solution à pH compris entre environ 2 et environ 9,
c)- on enduit le substrat par la suspension de façon à obtenir la couche poreuse,
d)- on séche et on effectue un traitement thermique à une température inférieure à 1000 °C.

**9.** procédé de préparation d'un catalyseur selon l'une des revendications 1 à 7, caractérisé en ce que :
a)- on prépare un mélange d'au moins un oxyde inorganique réfractaire, et/ou d'au moins un de ses précurseurs, d'au moins un oxyde d'uranium et/ou d'au moins une partie de l'un de ses précurseurs, d'au moins un oxyde de cérium et/ou d'au moins une partie de l'un de ses précurseurs et éventuellement d'un sel d'au moins un métal de la phase active, avantageusement déposé sur au moins l'un de ces oxydes,
b)- on met le mélange, en suspension, de préférence dans une solution à pH compris entre environ 2 et environ 9,
c)- on enduit le substrat par la suspension de façon à obtenir la couche poreuse,
d)- on séche et on effectue un traitement thermique à une température inférieure à 1000 °C,
e)- on effectue, au moins une fois les 2 étapes successives suivantes :
e1). on imprégne sur la couche poreuse la partie restante des sels précurseurs des dits oxydes de cérium et d'uranium et/ou, soit le sel de métal M de la phase active, soit la partie restante de ce sel s'il a été en partie introduit lors de l'étape a),

e2). on séche et on effectue un traitement thermique à une température inférieure à 1000 °C.

10. procédé de préparation d'un catalyseur selon l'une des revendications 1 à 7 caractérisé en ce que :

a)- on imprègne une partie au moins d'au moins un oxyde inorganique réfractaire par au moins une partie d'au moins un des sels précurseurs des oxydes de cérium et/ou d'uranium et/ou du métal M de la phase active, avantageusement déposé sur au moins un de ces oxydes,

b)- on sèche et on active thermiquement à une température inférieure à 1000° C,

c)- on prépare un mélange d'au moins une partie de cet oxyde inorganique refractaire imprégné ci dessus, éventuellement d'au moins une partie de l'oxyde de cérium, éventuellement d'au moins une partie de l'oxyde d'uranium, et éventuellement d'au moins une partie d'au moins un sel du métal M de la phase active,

d)- on met le mélange, en suspension, de préférence dans une solution à pH compris entre environ 2 et environ 9,

e)- on enduit le substrat par la suspension de façon à obtenir la couche poreuse,

f)- on séche et on effectue un traitement thermique à une tempèratuire inférieure à 1000 °C,

g)- on effectue, au moins une fois les 2 étapes successives suivantes :

g1). on imprègne sur la couche poreuse, la partie restante des sels précurseurs des dits oxydes de cérium et d'uranium et/ou soit le sel de métal de la phase active, soit la partie restante de ce sel s'il a été, en partie, introduit lors de l'étape d'enduction.

g2). on séche et on effectue un traitement thermique à une température inférieure à 1000 °C.

11. procédé selon l'une des revendications 8 à 10 dans lequel une alumine liante est ajoutée au mélange de l'étape a) des revendications 8 et 9 et ajoutée au mélange de l'étape c) selon la revendication 10.

12. utilisation d'un catalyseur selon l'une des revendications 1 à 7, dans le traitement des gaz d'échappement d'un véhicule automobile équipé soit d'un moteur à essence, soit d'un moteur diesel.


**Patentansprüche**

1. Multifunktioneller Katalysator für die Umwandlung von Kohlenmonoxid, Kohlenwasserstoffen und Stickstoffoxiden, der umfaßt ein Substrat, das von einer porösen Schicht überzogen ist, die mindestens eine katalytisch aktive Phase enthält, die besteht aus mindestens einem Metall M, ausgewählt aus der Gruppe, die besteht aus Platin, Rhodium, Palladium, Ruthenium, Iridium, Gold, Silber und Mischungen davon, dadurch gekennzeichnet, daß die poröse Schicht im wesentlichen besteht aus:
   - 20 bis 99 % mindestens eines schwerschmelzbaren Oxids,
   - 0,8 bis 70 % mindestens eines Ceroxids,
   - 0,1 bis 50 % mindestens eines Uranoxids und
   - 0,1 bis 20 % des Metalls M,
   wobei die Massenprozentsätze auf das wasserfreie Produkt bezogen sind.

2. Katalysator nach Anspruch 1, in dem die poröse Schicht im wesentlichen besteht aus:
   - 30 bis 95 % mindestens eines schwerschmelzbaren Oxids,
   - 4,3 bis 50 % mindestens eines Ceroxids,
   - 0,5 bis 30 % mindestens eines Uranoxids und
   - 0,2 bis 8 % des Mealls M.

3. Katalysator nach einem der Ansprüche 1 bis 2, in dem das schwerschmelzbare Oxid ausgewählt wird aus der Gruppe, die besteht aus $\alpha$-Aluminiumoxid, $\beta$-Aluminiumoxid, $\delta$-Aluminiumoxid, $\Theta$-Aluminiumoxid, $\gamma$-Aluminiumoxid, $\kappa$-Aluminiumoxid, $\chi$-Aluminiumoxid, Siliciumdioxid, Siliciumdioxid-Aluminiumoxid, den Zeolithen, Titanoxid und Mischungen davon.

4. Katalysator nach einem der Ansprüche 1 bis 3, dadurch gekennzeichnet, daß er mindestens ein Metall, ausgewählt aus der Gruppe Platin, Rhodium und Palladium, enthält.

5. Katalysator nach einem der Ansprüche 1 bis 4, in dem das Substrat aus einem metallischen oder keramischen Material besteht.

6. Katalysator nach einem der Ansprüche 1 bis 5, in dem das Substrat eine monolithische Form mit Bienen-

EP 0 399 891 B1

wabenstruktur hat.

7. Katalysator nach einem der Ansprüche 1 bis 6, in dem die poröse Schicht in einer Menge zwischen 20 und 200 g/l Substrat, vorzugsweise zwischen 50 und 150 g/l Substrat, eingeführt worden ist.

8. Verfahren zur Herstellung eines Katalysators nach einem der Ansprüche 1 bis 7, dadurch gekennzeichnet, daß man
   a) eine Mischung aus mindestens einem schwerschmelzbaren anorganischen Oxid und/oder mindestens einem seiner Vorläufer, mindestens einem Uranoxid und/oder einem seiner Vorläufer, mindestens einem Ceroxid oder einem seiner Vorläufer, einem Salz mindestens eines Metalls der aktiven Phase, das zweckmäßig auf mindestens einem dieser Oxide abgeschieden ist, herstellt,
   b) die Mischung suspendiert, vorzugsweise in einer Lösung mit einem pH-Wert zwischen etwa 2 und etwa 9,
   c) das Substrat mit der Suspension beschichtet unter Bildung der porösen Schicht und
   d) trocknet und eine thermische Behandlung bei einer Temperatur unterhalb 1000°C durchführt.

9. Verfahren zur Herstellung eines Katalysators nach einem der Ansprüche 1 bis 7, dadurch gekennzeichnet, daß man
   a) eine Mischung aus mindestens einem schwerschmelzbaren anorganischen Oxid und/oder mindestens einem seiner Vorläufer, mindestens einem Uranoxid und/oder mindestens einem Teil eines seiner Vorläufer, mindestens einem Ceroxid und/oder mindestens einem Teil eines seiner Vorläufer und gegebenenfalls einem Salz mindestens eines Metalls der aktiven Phase, das zweckmäßig auf mindestens einem dieser Oxide abgeschieden ist, herstellt,
   b) die Mischung suspendiert, vorzugsweise in einer Lösung mit einem pH-Wert zwischen etwa 2 und etwa 9,
   c) das Substrat mit der Suspension beschichtet unter Bildung der porösen Schicht,
   d) trocknet und eine thermische Behandlung bei einer Temperatur unterhalb 1000°C durchführt und
   e) mindestens einmal die beiden folgenden aufeinanderfolgenden Stufen durchführt:
   e1) man imprägniert die poröse Schicht mit dem restlichen Teil der Vorläufersalze der genannten Oxide von Cer und Uran und entweder dem Salz des Metalls und/oder dem Metall M der aktiven Phase oder dem restlichen Teil dieses Salzes, wenn es zum Teil in die Stufe (a) eingeführt worden ist, und
   e2) man trocknet und führt eine thermische Behandlung bei einer Temperatur unterhalb 1000°C durch.

10. Verfahren zur Herstellung eines Katalysators nach einem der Ansprüche 1 bis 7, dadurch gekennzeichnet, daß man
   a) mindestens einen Teil mindestens eines schwerschmelzbaren anorganischen Oxids mit mindestens einem Teil mindestens eines der Vorläufersalze der Oxide von Cer und/oder Uran und/oder des Metalls M der aktiven Phase, das zweckmäßig auf mindestens einem dieser Oxide abgelagert worden ist, imprägniert,
   b) trocknet und thermisch aktiviert bei einer Temperatur unterhalb 1000°C,
   c) eine Mischung aus mindestens einem Teil dieses wie oben imprägnierten schwerschmelzbaren anorganischen Oxids, gegebenenfalls mindestens einem Teil des Ceroxids, gegebenenfalls mindestens einem Teil des Uranoxids und gegebenenfalls mindestens einem Teil mindestens eines Salzes des Metalls M der aktiven Phase herstellt,
   d) die Mischung suspendiert, vorzugsweise in einer Lösung mit einem pH-Wert zwischen etwa 2 und etwa 9,
   e) das Substrat mit der Suspension beschichtet unter Bildung der porösen Schicht,
   f) trocknet und eine thermische Behandlung bei einer Temperatur unterhalb 1000°C durchführt und
   g) mindestens einmal die beiden folgenden aufeinanderfolgenden Stufen durchführt:
   g1) man imprägniert die poröse Schicht mit dem restlichen Teil der Vorläufersalze der genannten Oxide von Cer und Uran und/oder entweder dem Salz des Metalls der aktiven Phase oder dem restlichen Teil dieses Salzes, wenn es zum Teil bei der Beschichtungsstufe eingeführt worden ist, und
   g2) man trocknet und führt eine thermische Behandlung bei einer Temperatur unterhalb 1000°C durch.

11. Verfahren nach einem der Ansprüche 8 bis 10, bei dem man ein Aluminiumoxid-Bindemittel der Mischung der Stufe (a) der Ansprüche 8 und 9 und der Mischung der Stufe (c) des Anspruchs 10 zusetzt.

12. Verwendung eines Katalysators nach einem der Ansprüche 1 bis 7 bei der Behandlung der Abgase eines Automobils mit Benzinmotor oder Dieselmotor.

18

**Claims**

1. A multifunctional catalyst for oonverting carbon monoxide, hydrocarbons and nitrogen oxides, comprising a substrate coated with a porous layer which contains at least one catalytically active phase formed by at least one metal M selected from the group made up of platinum, rhodium, palladium, ruthenium, iridium, gold and silver, and mixtures thereof, characterised in that the porous layer comprises, as a weight percentage relative to the anhydrous product:
   - from about 20% to about 99% of at least one refractory oxide
   - from about 0.8% to about 70% of at least one cerium oxide
   - from about 0.1% to about 50% of at least one uranium oxide, and
   - from about 0.1% to about 20% of said metal M.

2. The catalyst of claim 1, wherein the porous layer comprises, as a weight per cent relative to the anhydrous product:
   - from about 30% to about 95% of at least one refractory oxide
   - from about 4.3% to about 50% of at least one cerium oxide
   - from about 0.5% to about 30% of at least one uranium oxide, and
   - from about 0.2% to about 8% of said metal M.

3. A catalyst of claim 1 or 2, wherein the refractory oxide is selected from the group formed by $\alpha$ alumina, $\beta$ alumina, $\delta$ alumina, $\theta$ alumina, $\gamma$ alumina, $\kappa$ alumina, $\chi$ alumina, silica, alumina-silica, zeolites, titanium oxide and mixtures thereof.

4. The catalyst of any of claims 1 to 3, characterised in that it comprises at least one metal from the group formed by platinum, rhodium and palladium.

5. The catalyst of any of claims 1 to 4, wherein the substrate is made of ceramic or metallic material.

6. The catalyst of any of claims 1 to 5, wherein the substrate is in monolithic form with a honeycomb structure.

7. The catalyst of any of claims 1 to 6, wherein the porous layer is introduced in a quantity ranging from 20 to 200 g/litre of substrate, and preferably from 50 to 150 g/litre of substrate.

8. A method of preparing the catalyst of any of claims 1 to 7, characterised by the steps of:
   a) preparing a mixture of at least one refractory inorganic oxide and/or at least one of its precursors, at least one uranium oxide and/or one of its precursors, at least one ocrium oxide or one of its precursors and a salt of at least one active phase metal, advantageously deposited on at least one of these oxides,
   b) suspending the mixture, preferably in a solution with a pH from about 2 to about 9.
   c) coating the substrate with the suspension so as to obtain the porous layer.
   d) drying and carrying out heat treatment at a temperature below 1000°C.

9. A method of preparing the catalyst of any of claims 1 to 7, characterised by the steps of:
   a) by preparing a mixture of at least one refractory inorganic oxide and/or at least one of its precursors, at least one uranium oxide and/or a part of one of its precursors, at least one cerium oxide and/or a part of one of its precursors or one of its precursors, and possibly a salt of at least one active phase metal, advantageously deposited on at least one of these oxides.
   b) suspending the mixture, preferably in a solution with a pH from about 2 to about 9.
   c) coating the substrate with the suspension so as to obtain the porous layer.
   d) drying and carrying out heat treatment at a temperature below 1000°C.
   e) carrying out the following two successive stages at least once :
      e1) impregnating onto the porous layer the remainder of the salts, which are precursors of said cerium and uranium oxides, and/or either the salt of active phase metal M or the remainder of the salt if part of it was included at stage a).
      e2) drying and carrying out heat treatment at a temperature below 1000°C.

10. A method of preparing the catalyst of any of claims 1 to 7, characterised by the steps of:
    a) impregnating at least part of at least one refractory inorganic oxide with at least part of at least one salt which is a precursor of the cerium and/or uranium oxides, and/or of the active phase metal M advantageously deposited on at least one of these oxides.

b) drying and heat activation at a temperature below 1000°C.

c) preparing a mixture of at least part of the refractory inorganic oxide impregnated above, possibly at least part of the cerium oxide, possibly at least part of the uranium oxide, and possibly at least part of at least one salt of the active phase metal M.

d) suspending the mixture, preferably in a solution with a pH from about 2 to about 9.

e) coating the substrate with the suspension so as to obtain the porous layer.

f) drying and carrying out heat treatment at a temperature below 1000°C.

g) carrying out the following two successive stages at least once:

g1) impregnating onto the porous layer the remainder of the salts, which are precursors of said cerium and uranium oxides, and/or either the salt of active phase metal M or the remainder of the salt if part of it was included at the coating stage;

g2) drying and carrying out heat treatment at a temperature below 1000°C.

11. The method of any of claims 8 to 10, wherein a soft alumina is added to the mixture of stage a) according to the claims 8 to 9 and added to the mixture of stage c) according to the claim 10.

12. The use of the catalyst of any of claims 1 to 7, for treating exhaust fumes from a motor vehicle with either a petrol or a diesel engine.